# EUROPEAN PATENT APPLICATION

(11) **EP 4 289 769 A1**
(43) Date of publication of application: **13.12.2023**
(21) Application number: 22178295.6
(22) Date of filing: 10.06.2022
(51) Int. Cl.: B65G 43/08, B65G 43/10, B65G 47/31

(54) **CONVEYING DEVICE OF PRODUCT BATCHES WITH SEVERAL CELLS DETECTION**

(71) Applicant: Sidel Participations, 76930 Octeville-sur-Mer (FR)
(72) Inventor: ARGENTI, Mauro, 43126 Parma (IT)
(74) Representative: Sidel Group

(57) **Abstract**

The invention relates to a conveying device (3) for conveying product batches (1) having a length, comprising an upstream conveyor (4), a downstream surface (5), and- an intermediate conveyor (6), being motorized to move the batches (1), a dedicated motorization of a variable speed of the upstream conveyor (4), a detecting means (7) for detecting the moved batches (1), wherein the detecting means (7) comprising several detection cells located along the intermediate conveyor (6), control means (8) of the dedicated motorization to command the variable speed of the upstream conveyor (4), said control means (8) being linked to and depending on the detection of the length of the batches (1) by one of the several cells of the detecting means (7) when the batches (1) being moved on and along at least the intermediate conveyor (6), the one of the several cells being selected to be located at a distance from a level position (400) depending of the length of the batches (1), especially half the length of the batches (1).

## Description

### Technical Field

The invention relates to the domain of industrial machines for treatment of products, especially to the industrial handling of batch or crates of products along a production line.

The term "product" includes an individual object. The product can be of any type.

Especially, the product is a container, such as a bottle or a flask, or even a can. Several products can be grouped into a box, such as a cardboard box.

A product can be made of any type of material, in particular made of plastic, metal or even glass. Depending on its shape and material, a product can be rigid or semi-rigid.

Such a container is intended to contain, in a non-exhaustive manner, a fluid, a liquid, powders or granules, in particular of the cosmetic or of the agrifood type (for example a beverage).

As known, within an industrial line, the products can receive several different successive treatments, such as the manufacture of the container, for example during a plastic injection or stretch-blow molding operation in the case of a plastic bottle, followed by filling and then closing with a cap, and labeling. At the end of these treatments, the products are said to be "final".

In view of their handling and transport, such final products undergo packaging, especially batch packaging, each batch of products comprising a group of several products, gathered in a matrix arrangement. For example, a usual batch of products, such as bottles, groups together six products in two rows and three columns.

Once the product groups have been produced, each group can be packaged by coating or casing.

Coating consists of surrounding or covering the group of products with a sheet or film, in order to hold the products together and to facilitate the handling of such a batch thus obtained. Such coating by being carried out through a filming or preferably bundling step, or else by coating by means of a sheet, in particular of paper or cardboard material. Such coated batch is usually called a "pack".

The groups of products can also be placed into crates, in particular of wood or of cardboard material.

Then for their transport or storage, the batches or crates are conveyed to a palletizing station to be handled and stacked together on a pallet, eventually with cardboard sheet as layers horizontally separating each level of batches or crates.

Herein after, the terms "batch" and "crate", also "pack", are equivalent.

### Background Art

As usually known, the transport of batches is operated along the production line by conveying devices, made of several aligned and successive conveyors. The base of each batch rests on the top surface of the conveyors. The batches are moved along a stream direction, along at least an upstream conveyor till feeding a downstream surface whereon the batches are handled.

Especially at the end of the production line, a palletizing station is located at the downstream surface and comprises a handling means, with a tool able to handle one batch or simultaneously several batches to load a pallet. The tool can be equipped at the end of a multi-axis robotic arm, with tri-dimensional mobility, in order to be able to rotate the batch to change its orientation, to raise the batch and to deposit on the pallet into a specified configuration depending on the format and the number of the batches to be palletized at each level of the pallet.

To manage the handling of the batches on the downstream surface, each batch have to be moved to a dedicated upload position, when the handling means comes to said upload position to handle said batch. So, it is necessary to verify exactly that each of the batch reaches the upload position at the right time, to allow its handling.

Moreover, a determined interval is created between the successive batches, to space batches from each other, in order to allow successive handlings of each of the batches. Such determined interval is achieved when transferring the batches from the upstream conveyor to the downstream surface, by controlling the speed of the upstream conveyor.

Especially the speed of the upstream conveyor is increased till reaching the speed of the downstream surface, to transfer one of the batches to said downstream surface, then decreased till the interval between said batch and the following batch is reached. Even the speed can be decreased to zero and the upstream conveyor is working into a « START AND STOP » way.

Due to accelerations and decelerations, even start and stop, of the upstream conveyor, the batches can sweep on the top surface of the upstream conveyor when the batches being moved and/or of the downstream surface when the batches being transferred.

Moreover the control of the acceleration and deceleration of the speed of the upstream conveyor must be very precise, and also depends on the format of the batches to be handled.

So, it is necessary to detect the real position of each of the batches, to control at trigger the handling means when each of the batches is at the upload position.

For example, if a batch is transferred with a less speed, the position of said batch is different than expected.

So, it is necessary to detect where really said batch to modify the triggering of the handling men.

Therefore, a known solution is to place a fixed detector, like a photocell, at the upload position, in order to detect in real time the real position of each of the batches, and eventually correct the handling tool movement.

A problem of such solution resides in that the unique fixed detector cannot adapt to different format of batch, with different dimensions, especially different lengths. So it is necessary to replace the fixed detector, each time the batch format production is changed, or to position the sensor in a location that allows it to handle all possible lengths of batch, which is this solution will not be optimized.

A solution consists in a movable detector, along the downstream surface. If this solution allows to change the movement the handling device to modify the upload position to the real position of the batch to be handled, it is also operated too late.

Another known solution comprises a detecting means placed along the upstream conveyor, with a scope orientated to the top surface of the upstream conveyor. Such detecting means has a unique detection cell, to detect each of the batches when crossing the scope during their movement on the top surface of the upstream conveyor. The speed of the upstream conveyor is controlled, regarding the detected position of the batch along the upstream conveyor.

Especially a detector is placed close to the end of the upstream conveyor, at a so-called « level position », corresponding of the begin position, where eventually each of the batches stops, and from where each of the batches is transferred to the downstream surface.

But as aforementioned, such detection along the upstream conveyor cannot detect any change of the batch position downstream, especially when and/or after transferring the batches to the downstream surface.

Another known solution comprises a detecting means placed on a side of the downstream surface, with a scope orientated to the output of the upstream conveyor feeding the downstream surface. Such detecting means comprises a unique detection cell, controlling the trigger of the handling means, regarding the detected position of the batch on the downstream surface.

Such known solutions have several drawbacks.

First, the detecting means is configured depending of the format of the batches transported along the production line. So when changing the format production, the detecting means have to be configured again or to be placed in a position to handle all possible lengths of batch.

Moreover, depending on the position of detection, along the downstream surface or along the upstream conveyor, such known solutions cannot control in an optimized way the speed of the upstream conveyor to reach the best position as possible when transferring each of the batches from said upstream conveyor to the downstream surface.

### Summary of Invention

An object of the present invention is to improve a conveying device for conveying product batches with a detecting means able to monitor the real position of the batches depending of the dimensions of the batches, especially the length extending along the stream direction.

Therefore, the detecting means is placed along an intermediate conveyor located between the upstream conveyor and the downstream surface.

Moreover, the detecting means comprises several detection cells located along the stream direction, preferably along the intermediate conveyor. Depending of the length of the batches, one of the several cells is determined to detect the real position of each of the batches, in order to better control the variable speed of the upstream conveyor, especially acceleration and deceleration.

In particular, one of the cells of the detecting means is selected regarding the length of the batches, so that said selected cell is located at the maximum of half of the length of the batches from the entry of the intermediate conveyor.

Therefore, the conveying device according to the invention comprises
- an upstream conveyor,
- a downstream surface,
- an intermediate conveyor for transferring the batches from the upstream conveyor to the downstream surface, the intermediate conveyor comprising an entry located at an end of the upstream conveyor,
- at least said upstream and intermediate conveyors being motorized to move the batches loaded on an upper surface along a stream direction extending from the upstream conveyor to the downstream surface,
- the length of the batches extending along the stream direction,
   the conveying device further comprising
- a dedicated motorization of a variable speed of the upstream conveyor,
- a detecting means for detecting the moved batches along the conveying device.

The conveying device is characterized in that
- the detecting means comprising several detection cells located at least along the intermediate conveyor and extending along the stream direction from the entry of the intermediate conveyor,
   and in that
   the conveying device comprises
- control means of the dedicated motorization to command the variable speed of the upstream conveyor,
- said control means being linked to and depending on the detection of the length of the batches by one of the several cells of the detecting means when the batches being moved on and along at least the intermediate conveyor,
- the one of the several cells being selected to be located at a distance from a level position depending of the length of the batches, especially at a distance corresponding at a maximum of half the length of the batches.

According to an embodiment, the detection means comprises at least two cells,
a first cell of the two cells and at least a second cell of the two cells, the first cell being located upstream regarding the second cell, the first cell being the closest from the entry of the intermediate conveyor.

According to an embodiment, the detection means comprises a grid of at least three cells.

According to an embodiment, the grid extending only along the intermediate conveyor from the entry.

According to an embodiment, the several cells are fixed along the detection means.

According to an embodiment, at least one of the several cells is mobile along the detection means.

The invention also relates to a production line for treatments of products equipped with the conveying device such as aforementioned.

According to an embodiment, the production line comprises several successive workstations dedicated to the treatments of the products, wherein
- one of the workstations is a batching machine of the products into batches,
- another of the workstations is a palletizing station of the batches.

Said production line is characterized in that it comprises a conveying device according to the invention, to move the product batches downstream the workstation to the palletizing station.

The invention also relates to a conveying method for conveying product batches, wherein
- the batches are moved along a stream direction on a top surface of an upstream conveyor at a variable speed, to be transferred to an intermediate conveyor at an acceleration speed feeding a downstream surface,
- the variable speed of the upstream conveyor being controlled to reach the acceleration speed of the intermediate conveyor when transferring the batches from the upstream conveyor to the downstream surface,
- the batches having dimensions including a length extending along the stream direction,
- detecting the batches when moving along the stream direction.

Said conveying method is characterized in that it comprises the steps of
- with detection means comprising several cells located at least along the intermediate conveyor and extending along the stream direction from an entry of the intermediate conveyor, detecting the batches with one of the several cells, the one of the several cells being selected to be located at a distance from a level position depending of the length of the batches, especially at a distance corresponding at a maximum of half the length of the batches.
   and in that
- controlling the variable speed of the upstream conveyor, depending on the detecting by the selected cell of the several cells.

Such conveying method is especially dedicated to the implementation of the conveying device accord to the invention.

So, the invention allows to better control the variable speed of the upstream conveyor, in order to manage and survey the real position of the batches, depending on their format.

Also, the invention causes less stress on the components of the upstream conveyor, increasing their durability, especially of the belt and the motorization.

### Brief description of the Drawings

The invention can be better understood on reading the following description given merely by way of example and with reference to the accompanying drawings, in which:
FIG. 1 is a schematic perspective view of an embodiment of a conveying device, especially showing a detection means made of a grid of several successive cells located at and extending along the intermediate conveyor;
FIG. 2 is a schematic vertical cross view of a simplified architecture of the conveying device, especially showing the link from the detecting means to the speed regulation of the intermediate conveyor;
FIG. 3 is a schematic top view of a global implementation of the conveying method of product batches, especially showing a flow of successive contiguous batches moved on a top surface of an upstream conveyor, transferred to an intermediate conveyor, to create an interval between successive batches in order to space them till each of the batches reaches the upload position on a downstream su rface;
FIG. 4 is a schematic view similar to figure 3, especially showing a first implementation of the conveying method, for a first format of batches, wherein one cell of the detecting means is selected at a distance from the entry of the intermediate conveyor, depending of the half of the length of the batches; and
FIG. 5 is a schematic view similar to figure 4, especially showing a second implementation of the conveying method, for a second format of batches, especially showing another cell of the detecting means is selected regarding the length of said second format.

### Description of Embodiments

The invention relates to the industrial handling of batch 1 or crates of products along a production line.

As aforementioned, the term "product" includes an individual object. The product can be of any type.

Especially, the product is a container, such as a bottle or a flask, or even a can. Several products can be grouped into a box, such as a cardboard box.

A product can be made of any type of material, in particular made of plastic, metal or even glass. Depending on its shape and material, a product can be rigid or semi-rigid.

Such a container is intended to contain, in a non-exhaustive manner, a fluid, a liquid, powders or granules, in particular of the cosmetic or of the agrifood type (for example a beverage).

Along the production line, the products can receive several different successive treatments, such as the manufacture of the container, for example during a plastic injection or stretch-blow molding operation in the case of a plastic bottle, followed by filling and then closing with a cap, and labeling. At the end of these treatments, the products are said to be "final".

In view of their handling and transport, such final products undergo packaging, especially batch packaging, each batch 1 of products comprising a group of several products, gathered in a matrix arrangement. Once the product groups have been produced, each group can be packaged by coating or casing, in order to obtain a batch 1, crate or pack of each group of products.

Herein after, the terms "batch" and "crate", also "pack", are equivalent.

Then for their transport or storage, the batches are conveyed to a palletizing station to be handled and stacked together on a pallet, eventually with cardboard sheet as layers horizontally separating each level of batches or crates.

So, the invention first relates to a production line for treatments of products, comprising several successive workstations dedicated to the treatments of the products.

Moreover, one of the workstations is a batching machine of the products into batches 1. Another of the workstations is a palletizing station of the batches 1.

In order to transport the batches 1 along the production line, it further comprises a conveying device 3 to move the product batches 1 downstream the workstation to the palletizing station.

The invention also relates to such the conveying device 3 for conveying the product batches 1.

It is to be noticed that the batches 1 comprise dimensions, including a length 100. Depending on the format of products and/or batches 1 treated by the production line, the length 100 of the batches is not the same.

Thus being, said conveying device 3 comprises an upstream conveyor 4, a downstream surface 5 and an intermediate conveyor 6 for transferring the batches 1 from the upstream conveyor 4 to the downstream surface 5. So the intermediate conveyor 6 is located between the upstream conveyor 4 and the downstream surface 5.

Moreover the intermediate conveyor 6 comprises an entry 60 located at an end 40 of the upstream conveyor 4.

Each of the upstream conveyor 4, downstream surface 5 and intermediate conveyor 6 comprises an upper surface whereon the bottom of the batches 1 rests.

So, the batches 1 are transported and moved along a stream direction extending from the upstream conveyor 4 to the downstream surface 5.

It is to be noticed that the length 100 of the batches extends along said stream direction.

According to an embodiment, at least said upstream conveyor 4 and said intermediate conveyor 6 are motorized to move the batches 1.

According to a preferred embodiment, the downstream surface 5 is also motorized.

Especially, the intermediate conveyor 6 and the downstream surface 5 have the same speed.

According to an embodiment, the upstream conveyor 4, the intermediate conveyor 6, and/or the downstream surface 5 can be of any type, especially of an endless type.

According to an embodiment, the conveying device 3 comprises a dedicated motorization 41 of a variable speed of the upstream conveyor 4. Such dedicated motorization 41 allows to increase and to decrease the variable speed of the upstream conveyor 4, especially increasing the variable speed till reaching the speed of the intermediate conveyor 6, and reversely decrease the variable speed, eventually till stopping the upstream conveyor 4.

Moreover, such acceleration and deceleration of the variable speed depend on an actual position of the batch 1 that will later be transported downstream in order to be handled.

So, the acceleration and deceleration of the variable speed also depends on the format of the batches 1, especially the length 100.

Moreover the acceleration of the variable speed must be adapted to reach the speed of the intermediate conveyor 6, while keeping the well and correct position of each of the batches 1, during their transfer from the upstream conveyor 4 to the intermediate conveyor 6, and further to the downstream surface 5, in order to be handled at the upload position 500 on said downstream surface 5. In particular, each of the batches 1 is transferred from a position called « level position 400 » on the upstream conveyor 4 and should reach on the intermediate conveyor 6 at a position, called « trigger position » or « synchronized position », which corresponds to the upload position 500, once said batch 1 is moved along and transferred from the intermediate conveyor 6 to the downstream surface 5.

Therefore, it is necessary to detect and verify the real position of the batches 1 when moved along the conveying device 3.

So said conveying device 3 further comprises a detecting means 7 for detecting the moved batches 1 along the conveying device 3.

According to the invention, the detecting means 7 comprises several detection cells located at least along the intermediate conveyor 6 and extending along the stream direction from the entry 60 of the intermediate conveyor 6.

According to a preferred embodiment, the several cells are fixed along the detection means 7.

According to another embodiment, at least one of the several cells is mobile along the detection means 7. According to another embodiment, one or more of the several cells are mobile along the detection means 7. such mobility of the cells allows to easily and fast position said cells along the detection means 7, when changing the format of batches 1.

According to another embodiment, the detection means 7 comprises at least two cells: a first cell of the two cells and at least a second cell of the two cells. Moreover, the first cell is located upstream regarding the second cell. So, the first cell being the closest from the entry 60 of the intermediate conveyor 6.

According to another preferred embodiment, the detection means 7 comprises a grid 70 of at least three cells. In other words, the cells are located on both sides of the intermediate conveyor 6, contiguous to each other, forming a square matrix of detection over the surface of the conveying device 3.

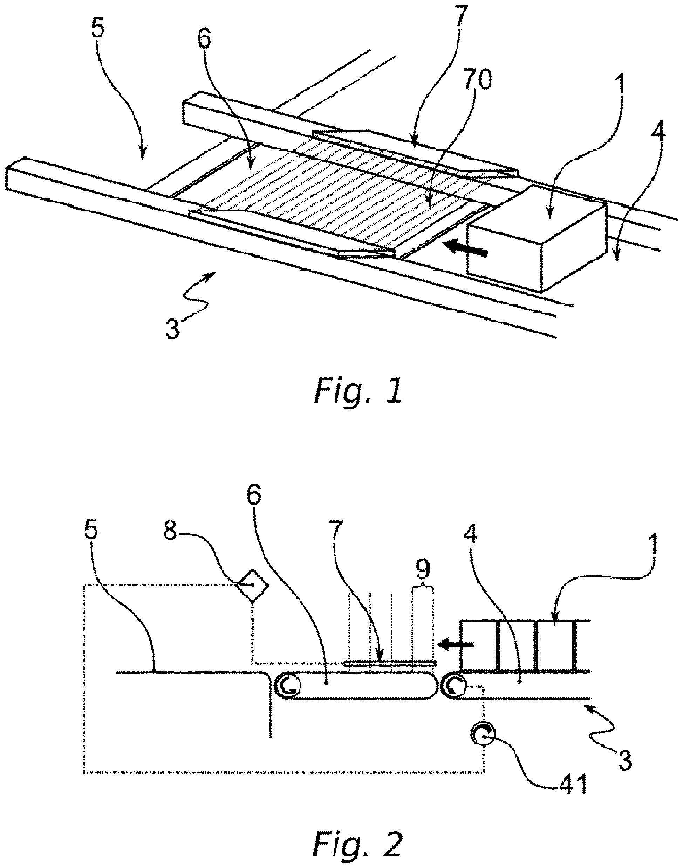

Such grid 70 is especially shown on figure 1.

According to another preferred embodiment, the grid extends only along the intermediate conveyor 6 from the entry 60. In other words, the first most upstream cell is located at the entry 60.

According to another embodiment, the cells of the several cells are regularly spaced apart from at least 5 mm to 100 mm. Preferably the cells are spaced with an interval of 20 mm from each other.

According to another embodiment, the detection means 7 comprises about twenty cells.

So, with such detection means 7 with several cells, it is possible to select at least one of the several cells, to adjust at the best the detection, depending on the length 100 of the batches. It is also possible to optimize the control of the acceleration and deceleration of the variable speed.

According to a preferred embodiment, it is possible to select one of the several cells, so-called "trigger cell", to adjust at the best the detection, depending on the length 100 of the batches. So with an optimize trigger cell, it is possible to better control the variable speed of the upstream conveyor 4.

As aforementioned, such acceleration and deceleration of the variable speed of the upstream conveyor 4 depend on the position of the trigger cell which is used to store the actual position of the batch 1 that will later be transported downstream in order to be handled. Different accelerations and decelerations must be calculated to ensure that the batch 1 intercepts the "trigger cell" when the upstream conveyor 4 has reached the same speed as intermediate conveyor 6.

Therefore, the conveying device 3 comprises control means 8 of the dedicated motorization 41 to command the variable speed of the upstream conveyor 4.

Moreover, said control means 8 is linked to and depends on the detection of the length 100 of the batches 1 by one of the several cells of the detecting means 7 when the batches 1 are moved on and along at least the intermediate conveyor 6,

It is to be mentioned that the one of the several cells being selected is located at a distance 9 from the entry 60 of the intermediate conveyor 6 depending of the length 100 of the batches 1. Especially the distance 9 corresponds at a maximum of half the length 100 of the batches 1.

For example, if a batch 1 has a length about 400 mm (millimeters), then the distance 9 is maximum 200 mm. So the selected cell is located downstream between the entry 60 and said distance 9 of 200 mm from said entry 60 of the intermediate conveyor 6.

According to another example, if a batch 1 has a length about 300 mm (millimeters), then the distance 9 is maximum 150 mm. So, the selected cell is located downstream between the entry 60 and said distance 9 of 150 mm from said entry 60 of the intermediate conveyor 6.

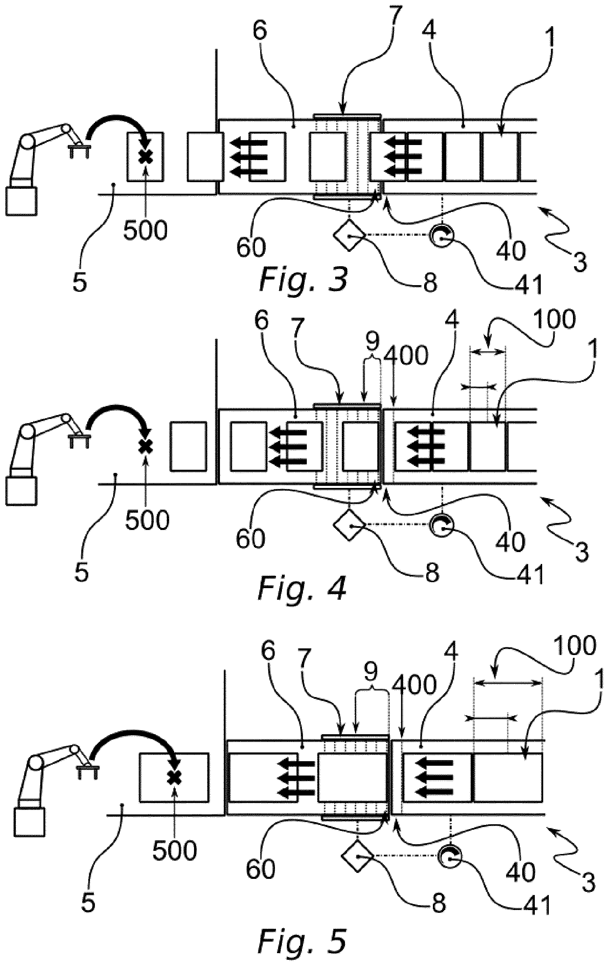

Such distance 9 is especially shown in the two implementation of figures 4 and 5, from two different lengths 100 of batches 1.

According to a preferred embodiment, the selected cell of several cells is located exactly at the distance 9 of half the length 100 of the batches 1, from the entry 60 of the intermediate conveyor 6.

According to an embodiment, one or more cells of the several cells can be selected, along the distance 9 from the level position 400 to the half length 100 of the batch 1, in order to continuously detect the movement of each of the batches 1 when transferring them from the upstream conveyor 4 to the intermediate conveyor 6.

The invention also relates to a conveying method for conveying product batches 1.

Such conveying method can be preferably adapted for the conveying device 3 such as aforementioned.

According to the invention, during the conveying method, the batches 1 are moved along a stream direction on a top surface of an upstream conveyor 4 at a variable speed. The batches 1 are transferred to an intermediate conveyor 6 at an acceleration speed and then said intermediate conveyor 6 feeds a downstream surface 5.

Moreover, the variable speed of the upstream conveyor 4 is controlled to reach the acceleration speed of the intermediate conveyor 6, when transferring the batches 1 from the upstream conveyor 4 to the downstream surface 5.

As aforementioned, the batches 1 have dimensions including a length 100 extending along the stream direction.

According to the invention, the conveying method consists in detecting the batches 1 when moving along the stream direction, in order to verify their correct position during their transport.

Therefore, with detection means 7 comprising several cells located at least along the intermediate conveyor 6 and extending along the stream direction from an entry 60 of the intermediate conveyor 6, the conveying method includes the step of detecting the batches 1 with one of the several cells.

Moreover, the one of the several cells is selected to be located at a distance 9 from the level position 400 of the intermediate conveyor 6 depending of the length 100 of the batches 1. Especially the distance 9 corresponds at a maximum of half the length 100 of the batches 1.

The conveying method further includes the step of controlling the variable speed of the upstream conveyor 4, depending on the detecting by the selected cell of the several cells.

Thereby, through the conveying device 3 and the conveying method according to the invention, the detection means 7 with several cells, specifically located regarding the length 100 of the batches 1 to be transported, allows to optimize the acceleration required to transfer each of the batches 1 from the upstream conveyor 4 to the intermediate conveyor 6 (and/or also the deceleration). The transfer is operated in a better way and the stress of the materials is decreased, with a reduction of the wear of the belts and the support frames, also of the mechanical elements, such as transmissions, gears, etc.

Using several cells offers a choice into the detection of the batches 1, for monitoring over time when each of the batches 1 reach the target velocity. This additional information can be used both to monitor a machine efficiency and to perform a predictive maintenance.

## Claims

1. A conveying device (3) for conveying product batches (1),
the batches (1) comprising dimensions, including a length
said conveying device comprising
- an upstream conveyor (4),
- a downstream surface (5),
- an intermediate conveyor (6) for transferring the batches (1) from the upstream conveyor (4) to the downstream surface (6), the intermediate conveyor (6) comprising an entry (60) located at an end (40) of the upstream conveyor (4),
- at least said upstream conveyor (4) and said intermediate conveyor (6) being motorized to move the batches (1) loaded on an upper surface along a stream direction extending from the upstream conveyor (4) to the downstream surface (5),
- the length of the batches (1) extending along the stream direction,
the conveying device (3) further comprising
- a dedicated motorization of a variable speed of the upstream conveyor (4),
- a detecting means (7) for detecting the moved batches (1) along the conveying device (3),
**characterized in that**
- the detecting means (7) comprising several detection cells located at least along the intermediate conveyor (6) and extending along the stream direction from the entry (60) of the intermediate conveyor (6),
and **in that**
the conveying device (3) comprises
- control means (8) of the dedicated motorization to command the variable speed of the upstream conveyor (4),
- said control means (8) being linked to and depending on the detection of the length of the batches (1) by one of the several cells of the detecting means (7) when the batches (1) being moved on and along at least the intermediate conveyor (6),
- the one of the several cells being selected to be located at a distance from a level position (400) depending of the length of the batches (1), especially at a distance corresponding at a maximum of half the length of the batches (1).

2. Conveying device (3) according to claim 1, **characterized in that**
- the detection means (7) comprises at least two cells,
- a first cell of the two cells and at least a second cell of the two cells, the first cell being located upstream regarding the second cell, the first cell being the closest from the entry (60) of the intermediate conveyor (6).

3. Conveying device according to claim 2, **characterized in that**
- the detection means (7) comprises a grid (70) of at least three cells.

4. Conveying device (3) according to claim 2, **characterized in that**
- the grid (70) extending only along the intermediate conveyor (6) from the entry (60).

5. Conveying device (3) according to any of the preceding claims, **characterized in that**
- the several cells are fixed along the detection means (7).

6. Conveying device (3) according to any of the claims 1 to 4, **characterized in that**
- at least one of the several cells is mobile along the detection means (7).

7. Production line for treatments of products, comprising several successive workstations dedicated to the treatments of the products, wherein
- one of the workstations is a batching machine of the products into batches (1),
- another of the workstations is a palletizing station of the batches (1), **characterized in that**
- the production line comprises a conveying device (3) according to the preceding claims, to move the product batches (1) downstream the workstation to the palletizing station.

8. Conveying method for conveying product batches (1), wherein
- the batches (1) are moved along a stream direction on a top surface of an upstream conveyor (4) at a variable speed, to be transferred to an intermediate conveyor (6) at an acceleration speed feeding a downstream surface (5),
- the variable speed of the upstream conveyor (4) being controlled to reach the acceleration speed of the intermediate conveyor (6) when transferring the batches (1) from the upstream conveyor (4) to the downstream surface (6),
- the batches (1) having dimensions including a length extending along the stream direction,
- detecting the batches (1) when moving along the stream direction,
**characterized in that** it comprises the steps of
- with detection means (7) comprising several cells located at least along the intermediate conveyor (6) and extending along the stream direction from an entry (60) of the intermediate conveyor (6), detecting the batches (1) with one of the several cells, the one of the several cells being selected to be located at a distance from a level position (400) depending of the length of the batches (1), especially at a distance corresponding at a maximum of half the length of the batches (1).
and **in that**
- controlling the variable speed of the upstream conveyor (4), depending on the detecting by the selected cell of the several cells.
